(19) Europäisches Patentamt
European Patent Office
Office européen des brevets

(11) EP 2 423 668 B1

(12) **FASCICULE DE BREVET EUROPEEN**

(45) Date de publication et mention de la délivrance du brevet:
**13.11.2019 Bulletin 2019/46**

(51) Int Cl.:
*G01N 21/03* (2006.01) *G01N 21/05* (2006.01)
*G01N 21/64* (2006.01) *G01N 21/77* (2006.01)
*G01N 21/78* (2006.01)

(21) Numéro de dépôt: **11178862.6**

(22) Date de dépôt: **25.08.2011**

(54) **Système et procédé de détection d'analytes présents dans un échantillon gazeux**

Vorrichtung und Verfahren zur Detektion eines Analyten in einer gasförmigen Probe

System and method for detection of an analyte in a gaseous sample

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.08.2010 FR 1056909**

(43) Date de publication de la demande:
**29.02.2012 Bulletin 2012/09**

(73) Titulaire: **Commissariat à l'Énergie Atomique et aux Énergies Alternatives**
**75015 Paris (FR)**

(72) Inventeurs:
- **Vignoud, Séverine**
  **38190 BERNIN (FR)**
- **Descamps, Michaël**
  **93100 MONTREUIL (FR)**
- **Perraut, François**
  **38134 SAINT-JOSEPH DE RIVIERE (FR)**
- **Planat-Chretien, Anne**
  **38120 SAINT-EGREVE (FR)**
- **Schultz, Emmanuelle**
  **38120 SAINT-EGREVE (FR)**

(74) Mandataire: **Augarde, Eric**
**Brevalex**
**56 Boulevard de l'Embouchure,**
**Bât. B**
**B.P. 27519**
**31075 Toulouse Cedex 2 (FR)**

(56) Documents cités:
**FR-A1- 2 890 745** **US-A1- 2008 245 971**

- **SCHULTZ ET AL: "A novel fluorescence-based array biosensor: Principle and application to DNA hybridization assays", BIOSENSORS AND BIOELECTRONICS, ELSEVIER BV, NL, vol. 23, no. 7, 22 octobre 2007 (2007-10-22), pages 987-994, XP022440001, ISSN: 0956-5663, DOI: DOI:10.1016/J.BIOS.2007.10.006**
- **TAO L ET AL: "Surface energy induced patterning of organic and inorganic materials on heterogeneous Si surfaces", JOURNAL OF VACUUM SCIENCE AND TECHNOLOGY: PART B, AVS / AIP, MELVILLE, NEW YORK, NY, US, vol. 25, no. 6, 6 décembre 2007 (2007-12-06), pages 1993-1997, XP012105405, ISSN: 1071-1023, DOI: DOI:10.1116/1.2804577**
- **WENCHUANG HU ET AL: "Surface energy induced patterning of polymer nanostructures for cancer diagnosis and therapy", 7TH IEEE CONFERENCE ON NANOTECHNOLOGY, 2007 : IEEE-NANO 2007 ; HONG KONG, CHINA, 2 - 5 AUG. 2007, PISCATAWAY, NJ : IEEE SERVICE CENTER, PISCATAWAY, NJ, USA, 2 août 2007 (2007-08-02), pages 295-300, XP031307777, ISBN: 978-1-4244-0607-4**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 2 423 668 B1

## Description

### DOMAINE TECHNIQUE

La présente invention concerne le domaine général de la détection d'analytes d'intérêt présents dans un échantillon gazeux. Ces analytes peuvent être des composés chimiques, biologiques ou biochimiques présents dans un environnement gazeux.

### ÉTAT DE LA TECHNIQUE ANTÉRIEURE

Dans de nombreux domaines, on cherche à réaliser, à analyser un environnement gazeux ou un échantillon gazeux, dans le but, par exemple, de détecter des composés chimiques, biologiques ou biochimiques présents.

C'est le cas notamment du domaine du diagnostic clinique, où l'on peut chercher à détecter des biomarqueurs de maladies dans des échantillons d'haleine de personne, du contrôle de l'environnement, en particulier de la qualité de l'air, ou du domaine du contrôle des activités industrielles, par exemple pour l'analyse des rejets industriels, ou la surveillance du personnel exposé à des composés organiques volatils.

La demande de brevet WO2007/031657, déposée notamment au nom de la demanderesse, décrit un système de détection d'analytes d'intérêt présents dans un échantillon gazeux. Ce détecteur permet la détection du formaldéhyde, composé classé cancérigène et particulièrement présent dans certains produits de construction utilisés dans le domaine du bâtiment.

Le système de détection comprend une chambre fluidique comportant un orifice d'entrée de gaz et un orifice de sortie de gaz. L'échantillon gazeux est destiné à s'écouler de l'orifice d'entrée jusqu'à l'orifice de sortie, suivant un chemin d'écoulement fluidique privilégié.

A l'intérieur de la chambre fluidique est déposée une couche mince d'un matériau nanoporeux sol-gel. Le matériau nanoporeux sol-gel contient des molécules-sonde susceptibles de réagir avec le formaldéhyde, par exemple du Fluoral-P, ce qui entraîne une variation de ses propriétés spectrales.

Ainsi, lorsque l'échantillon gazeux s'écoule dans la chambre fluidique, il vient naturellement au contact de la couche mince de matériau nanoporeux sol-gel et s'introduit dans celui-ci, du fait de la porosité du matériau. Les molécules-sonde réagissent alors avec les formaldéhydes, ce qui se traduit par une variation des propriétés spectrales de ces molécules-sonde.

Un dispositif de détection optique permet de détecter ladite variation des propriétés spectrales des molécules-sonde avant et après réaction avec le formaldéhyde, notamment une variation des spectres d'absorbance ou de fluorescence, permettant ainsi au système de détecter la présence d'analytes d'intérêt dans l'échantillon gazeux.

Il comprend pour cela une source d'excitation lumineuse et un collecteur optique. La source d'excitation lumineuse éclaire l'ensemble de la couche de matériau nanoporeux sol-gel suivant une longueur d'onde déterminée ou sur un spectre donné de longueurs d'onde, et le collecteur reçoit la lumière transmise ou réfléchie, ou la lumière émise par fluorescence.

La couche mince de matériau nanoporeux sol-gel forme ainsi une zone tridimensionnelle de détection dont la surface d'adsorption et/ou de liaison des analytes, du fait de sa structure tridimensionnelle et de la taille des pores, est très importante.

De plus, ce matériau est particulièrement adapté à l'analyse d'échantillons gazeux. En effet, la résistance hydraulique $R_h$ à l'écoulement d'un fluide dans un matériau poreux est sensiblement proportionnelle à $\mu_f/d^4$, où $\mu_f$ est la viscosité dynamique du fluide et d la taille moyenne des pores. On comprend que la résistance vis-à-vis d'un liquide est au moins mille fois plus élevée que la résistance vis-à-vis d'un gaz. La résistance hydraulique dans le cas d'un liquide peut donc être très élevée et empêcher ainsi l'écoulement de celui-ci dans le matériau.

Par ailleurs, la faible viscosité dynamique d'un gaz permet ainsi d'utiliser un matériau à très faible taille moyenne de pores, ce qui augmente ainsi la surface d'adsorption et/ou de liaison des analytes.

Cependant, ce dispositif de détection présente un certain nombre d'inconvénients.

Ainsi, le matériau utilisé dans cet exemple de l'art antérieur est un matériau sol-gel déposé par la technique connue de « *dip-coating* », qui ne permet pas de délimiter la forme générale du matériau. La couche mince présente ainsi une forme générale qui ne coïncide pas nécessairement avec le chemin d'écoulement fluidique de l'échantillon gazeux. Certaines zones de la couche mince sont donc peu ou pas parcourues par l'échantillon gazeux.

Par ailleurs, la source d'excitation lumineuse illumine l'ensemble de la couche mince. Elle illumine ainsi dans le même temps des zones spatiales de la couche mince présentant un taux de réaction important et des zones spatiales à faible taux de réaction. Le signal de réponse à l'excitation lumineuse, reçu par le collecteur optique, est donc spatialement hétérogène, ce qui nuit à la résolution du détecteur.

De plus, la source d'excitation lumineuse est susceptible d'éclairer des zones de la couche mince qui ne sont pas directement situées dans le chemin fluidique de l'échantillon gazeux. Ces zones ne répondent donc peu ou pas à l'excitation lumineuse qui leur est envoyée, diminuant également la résolution du détecteur.

Enfin, le détecteur présente une sensibilité qui a tendance à se dégrader au cours du temps. En effet, les molécules-sonde qui ont réagi avec un analyte et ont répondu par absorbance ou fluorescence à l'excitation lumineuse, ne répondent plus aux excitations lumineuses ultérieures. Aussi, la quantité de molécules-sonde aptes à réagir avec l'analyte et à répondre à une excitation lumineuse diminue au cours du temps, diminuant ainsi la sensibilité du détecteur.

Un autre exemple de système de détection d'analytes d'intérêt présents dans un fluide est décrit dans l'article de Schultz et al. intitulé « A novel fluorescence-based array biosensor : Principle and application to DNA hydridization assays », 2008, Biosens. Bioelectron. 23, 987-994.

Ce détecteur comprend une chambre fluidique dans laquelle circule un liquide. Le liquide est susceptible de contenir différents types d'analytes d'intérêt.

Une surface de la chambre fluidique comporte une pluralité de zones bidimensionnelles de détection sur lesquelles sont directement greffées des molécules-sonde. Les molécules-sonde de chaque zone de détection sont destinées à réagir avec un type différent d'analytes d'intérêt. La surface recevant les zones de détection est une surface d'un substrat transparent.

Le dispositif de mesure optique comprend une pluralité de sources d'excitation lumineuse, disposées chacune de manière orthogonale au substrat et en vis-à-vis d'une zone de détection différente, et un unique collecteur optique disposé face à une extrémité latérale du substrat.

Ainsi, lorsque le liquide s'écoule dans la chambre fluidique, il vient au contact des zones bidimensionnelles de détection. Les molécules-sonde des zones de détection réagissent avec les analytes d'intérêt, suivant le type d'analyte.

Les sources d'excitation lumineuse illuminent successivement les zones de détection. Les molécules-sonde ayant réagi avec un analyte répondent à l'excitation lumineuse correspondante par l'émission d'un signal lumineux de fluorescence. Ce signal est réfracté dans le substrat transparent puis transmis à l'intérieur de celui-ci, par réflexion totale interne, jusqu'au collecteur optique. L'excitation successive des zones de détection permet d'éviter toute interférence des signaux lumineux émis par les différentes zones de détection.

Cependant, ce système de détection présente une durée de fonctionnement particulièrement limitée. D'une part, les zones de détection sont des zones bidimensionnelles, ce qui limite fortement la quantité de molécules-sonde par zone de détection. D'autre part, chaque zone de détection étant dédiée à une unique catégorie d'analytes d'intérêt, lorsque les molécules-sonde d'une même zone de détection ont toutes réagi avec l'analyte considéré, la détection de cet analyte n'est plus possible.

## EXPOSÉ DE L'INVENTION

L'invention a pour but de présenter un système de détection d'analytes d'intérêt présents dans un échantillon gazeux remédiant au moins en partie aux inconvénients mentionnés ci-dessus relatifs aux réalisations de l'art antérieur.

Pour ce faire, l'invention a pour objet un système de détection d'analytes d'intérêt présents dans un échantillon gazeux.

Selon l'invention, le système de détection comprend :

- une couche d'un matériau poreux, disposée à la surface d'un substrat de manière à s'étendre longitudinalement suivant un chemin d'écoulement fluidique de l'échantillon gazeux, ledit matériau poreux contenant une pluralité de molécules-sonde, chaque molécule-sonde pouvant réagir avec l'analyte d'intérêt en entraînant une modification des propriétés spectrales de ladite molécule-sonde ;
- des moyens pour générer un écoulement de l'échantillon gazeux suivant ledit chemin fluidique, de sorte que l'échantillon gazeux vienne au contact de ladite couche de matériau poreux ; et
- au moins un dispositif de détection optique apte à détecter successivement, au niveau de zones distinctes de détection de ladite couche de matériau poreux réparties suivant ledit chemin fluidique, une modification des propriétés spectrales d'au moins l'une desdites molécules-sonde
- au moins une source d'excitation lumineuse (51) pour éclairer successivement lesdites zones de détection (32),
- au moins un collecteur optique (52) pour recevoir au moins un signal lumineux (34) provenant d'au moins l'une desdites molécules-sonde (31) contenues dans les zones de détection (32) successivement éclairées, en réponse audit signal d'excitation lumineuse (33) correspondant, et - des moyens de calcul (53) pour calculer une modification des propriétés spectrales d'au moins une desdites molécules-sonde (31), à partir dudit signal lumineux de réponse (34) préalablement reçu.

Par molécule-sonde, on entend une molécule spécifique à un analyte d'intérêt pouvant réagir avec celui-ci. La réaction entre la molécule-sonde et ledit analyte entraîne une modification des propriétés spectrales de la molécule-sonde.

La molécule-sonde mise en œuvre dans le cadre de la présente invention présente des propriétés fluorogènes ou chromogènes lorsqu'elle interagit avec un analyte spécifique.

Dans le cadre de l'invention, la modification des propriétés spectrales de la molécule-sonde est optiquement détectable lorsque la molécule-sonde est soumise à un signal d'excitation lumineuse d'une longueur d'onde donnée ou sur un spectre donné de longueurs d'onde.

Par optiquement détectable, on entend que la molécule-sonde soumise à un signal d'excitation lumineuse émet en réponse un signal lumineux, du fait de ses propriétés fluorogènes ou chromogènes.

Par modification des propriétés spectrales, on entend une modification de la longueur d'onde des maxima d'absorption et/ou de fluorescence, voire une diminution ou une augmentation de l'intensité d'absorption et/ou de fluorescence à une longueur d'onde donnée.

La modification des propriétés spectrales se déduit par comparaison des caractéristiques spectrales du signal de réponse de la molécule-sonde ayant réagi avec un analyte spécifique à un signal d'excitation par rapport à des caractéristiques spectrales, dites de référence, du signal de réponse de la molécule-sonde n'ayant pas réagi avec ledit analyte d'intérêt à un même signal d'excitation.

Les molécules-sonde peuvent être caractérisées, directement ou indirectement, par des propriétés spectrales d'absorption et/ou de fluorescence. Une molécule-sonde peut ainsi être caractérisée par des propriétés spectrales de manière directe, lorsque le signal de réponse au signal d'excitation est émis par la molécule-sonde elle-même. Par ailleurs, une molécule-sonde peut être caractérisée par des propriétés spectrales de manière indirecte, par exemple par le biais du produit de la réaction de la molécule-sonde avec un analyte d'intérêt. Dans ce cas, on peut comparer les propriétés spectrales de la molécule-sonde avant réaction avec l'analyte spécifique et les propriétés spectrales du produit de la réaction entre la molécule-sonde et ledit analyte, pour en déduire une modification des propriétés spectrales de ladite molécule-sonde.

Par chemin d'écoulement fluidique de l'échantillon gazeux, on entend une zone tridimensionnelle qui s'étend suivant une direction donnée, dans laquelle l'échantillon gazeux est destiné à s'écouler.

Par zones distinctes de détection, on entend des zones spatiales de la couche de matériau poreux différentes les unes des autres. Elles peuvent néanmoins se chevaucher partiellement.

Ainsi, le détecteur selon l'invention comprend une couche de matériau poreux. La couche est tridimensionnelle d'une part et présente une pluralité de pores dans lesquels peut s'introduire l'échantillon gazeux d'autre part.

Les molécules-sonde sont donc disposées dans le matériau, notamment à l'interface solide/gaz du matériau, et particulièrement au niveau des pores. Ainsi, la surface d'adsorption et/ou de liaison des analytes avec les molécules-sonde est particulièrement élevée.

De plus, la couche de matériau poreux s'étend longitudinalement suivant le chemin fluidique. Il ne présente donc sensiblement pas de zones peu ou pas parcourues par l'échantillon gazeux en écoulement.

A la différence du premier exemple de l'art antérieur décrit précédemment, le dispositif optique du détecteur selon l'invention ne détecte pas, dans le même temps, les modifications de propriétés spectrales au niveau de l'ensemble de la couche de matériau poreux, mais celles détectées, successivement, au niveau de zones distinctes de détection de la couche de matériau poreux.

Par ailleurs, dans la mesure où le dispositif optique détecte successivement les modifications de propriétés spectrales de molécules-sonde situées dans des zones distinctes réparties suivant le chemin fluidique, le taux d'émission du signal de réponse des molécules-sonde ayant réagi est sensiblement constant au niveau de chacune desdites zones de détection. Aussi, le détecteur selon l'invention présente une résolution importante.

De plus, dans la mesure où les modifications des propriétés spectrales des molécules-sonde des différentes zones de détection ne sont pas détectées en même temps, mais successivement suivant les zones de détection, le taux d'émission du signal de réponse des molécules-sonde ayant réagi est sensiblement constant au cours du temps. Le détecteur présente donc une sensibilité sensiblement constante au cours du temps.

La couche de matériau poreux peut s'étendre suivant le chemin fluidique de manière spatialement continue ou discontinue. Lorsqu'elle s'étend de manière discontinue, elle forme une succession de plots de couche spatialement distincts les uns des autres.

Ledit matériau est, de préférence, microporeux ou mésoporeux. Les matériaux microporeux présentent une taille moyenne de pores sensiblement inférieure à 20 Å, les matériaux mésoporeux présentent une taille moyenne de pores comprise entre 20 Å et 500 Å, les matériaux macroporeux présentent une taille moyenne de pores supérieure à 500 Å, par exemple comprise entre 50 nm et 100 $\mu$m. De préférence, le matériau mis en œuvre dans l'invention est microporeux.

Ledit matériau poreux peut être un sol-gel. Par « matériau de type sol-gel » ou « matériau sol-gel », les deux expressions étant équivalentes et interchangeables, on entend un matériau obtenu par un procédé sol-gel consistant à utiliser comme précurseurs des alcoxydes métalliques, identiques ou différents, de formule $M(OR)_n(R')_m$ dans laquelle M est un métal tel que le silicium, R et R' représentent un groupement alkyle et m et n des entiers avec $m + n = 4$, $2 \leq n \leq 4$ et $0 \leq m \leq 2$. Les matériaux sol-gel sont généralement préparés dans un solvant, qui est de préférence miscible à l'eau et évaporable dans des conditions douces, dans lequel les précurseurs sont solubles. Dans le cas des alcoxydes de silicium, on peut notamment citer les alcools, tels que le méthanol, l'éthanol ; les éthers, tels que le diéthyléther et le tétrahydrofurane ; les solvants chlorés, tels que le chloroforme, $CH_2Cl_2$, $C_2H_5Cl_2$ ou d'autres solvants aprotiques comme $CH_3CN$, l'acétone, la méthyléthylcétone, ou le dioxane ou protiques comme l'acide acétique, le formamide. En présence d'eau, l'hydrolyse des groupements alcoxyde (-OR) intervient et ces derniers sont transformés en groupements silanol (Si-OH) qui se condensent en formant des groupements siloxane (Si-O-Si). De petites particules de taille généralement inférieure à 1 nanomètre sont alors formées. Elles s'agrègent et forment des amas lacunaires en suspension dans le liquide : c'est le sol. La polycondensation se poursuivant au cours du temps, la viscosité du sol augmente jusqu'à gélification : le sol devient un gel. Un matériau sol-gel solide est obtenu par séchage du gel. Au cours de cette

étape, les solvants résiduels et interstitiels s'échappent du réseau polymérique formé et s'évaporent, ce qui provoque la contraction du matériau. On obtient un matériau final dont le volume est réduit par comparaison au volume occupé par le sol. Le sol correspond donc à une solution à partir de laquelle le matériau d'intérêt à déposer, en l'occurrence, le matériau sol-gel est obtenu.

Le matériau sol-gel mis en œuvre dans le cadre de la présente invention est essentiellement préparé à partir de 1 à 4 précurseurs alcoxysilanes et essentiellement obtenu à partir de l'hydrolyse de 1 à 4 précurseurs alcoxysilanes. Le matériau sol-gel mis en œuvre dans le cadre de la présente invention est donc essentiellement constitué d'unités issues de l'hydrolyse d'un seul précurseur alcoxysilane ou issues de 2, 3 ou 4 précurseurs alcoxysilanes différents.

A titre de précurseur alcoxysilane utilisable dans le cadre de la présente invention, on peut citer le tétraméthoxysilane (TMOS), le tétraéthoxysilane (TEOS), le tétrapropoxysilane (TPOS), le tétrabutoxysilane (TBOS), le méthyltriméthoxysilane (MTMOS), l'éthyltriméthoxysilane (ETMOS), le propyltriméthoxysilane (PTMOS), le méthyltriéthoxysilane (MTEOS), l'éthyltriéthoxysilane (ETEOS), le propyltriéthoxysilane (PTEOS), le 3-aminopropyltriéthoxysilane (APTES), le 3-aminopropyltriméthoxysilane (APTMS), le (3-(méthylamino)propyl)triméthoxysilane, le 3-carboxypropyltriéthoxysilane, le 3-carboxypropyltriméthoxysilane, le 1,2-bis(triéthoxysilyl)éthane, le 1,2-bis(triméthoxysilyl)éthane, le (3,3,3-trichloropropyl)triéthoxysilane, le 3,3,3-trifluoropropyl-triméthoxysilane et leurs mélanges.

Avantageusement, le précurseur alcoxysilane mis en œuvre dans le cadre de la présente invention est le TMOS.

Le matériau sol-gel peut en outre contenir des composés structurants tels que des polymères organiques, comme les ionomères et notamment les polymères organiques fluorés dérivés de l'éthylène à fonction acide, tel que du NAFION®, et également des tensioactifs généralement neutres.

Quelle que soit la variante, le matériau sol-gel final contient en général au plus 95% en masse de dérivés d'alcoxysilanes, notamment au plus 85% en masse de dérivés d'alcoxysilanes et, en particulier, de 60 à 80% en masse de dérivés d'alcoxysilanes.

Avantageusement, ledit matériau est un matériau nanoporeux sol-gel d'oxydes métalliques.

Ledit matériau peut également être un matériau poreux polymère. Par « matériau polymère », on entend, dans le cadre de la présente invention, un (co)polymère naturel ou synthétique, soluble ou insoluble et notamment organique. Le matériau polymère utilisé dans la présente invention peut être un hydrogel.

Ainsi, le matériau polymère utilisable dans le cadre de la présente invention est choisi parmi l'agarose ; la gélatine ; la cellulose ; la carboxyméthylcellulose ; un alginate ; une polyoléfine ; un polymère styrénique comme une résine polystyrène avantageusement poreuse ; un polymère hydrocarboné halogéné comme du polytétrafluoroéthylène ou du poly(chlorotrifluoroéthylène) ; un polymère vinylique comme un poly(vinyl décanoate) ou du polyalcool de vinyle ; un polymère (méth)acrylique comme un poly(n-butyl acétate) ou un poly(benzyl méthacrylate) ; du polyéthylène glycol ; du poly(propylène fumarate) ; du poly(éthylène fumarate) ; un poly(alpha-hydroxyester) ; un poly(orthoester) ; un polyanhydride ; un poly(phosphazène) ; un poly(ester amide) ; un acide polylactique ; un acide polyglycolique ; le polycaprolactone (PCL) ; le polydioxanone (PDO) ; un polyuréthane ; un gel de cholestéryl anthraquinone-2-carboxylate et de polyméthylsiloxane ; un gel de 1,3 :2,4-dibenzylidene-sorbitol et d'octaméthylcyclotétrasiloxane ; un gel de diamide aromatique à chaîne perfluorée et de perfluorotributylamine notamment décrit dans l'article de Loiseau et al., « A fluoroponytails containing organogelator: gelation of perfluorotributylamine and isopropopanol », 2002, Tetrahedron, vol. 58, pages 4049-4052.

Le substrat présent dans le détecteur selon la présente invention est un substrat solide sensiblement plan. Ledit substrat peut être transparent ou translucide, c'est-à-dire laisser passer la lumière.

A titre d'exemple de substrat, on peut citer un support de biopuce ou une lame de microscope tel que ceux classiquement utilisés en silicium, en verre, en métal, en polymère ou en plastique. Il peut être de taille et de forme variées.

Le substrat peut, préalablement à la réception de la couche de matériau poreux, avoir subi un traitement préparatoire de façon à modifier et/ou à améliorer, les propriétés hydrophiles ou hydrophobes de sa surface. Ce traitement peut consister en une modification chimique de la surface du support par des traitements tels que des traitements oxydants ou en déposant un revêtement sur cette surface par les techniques habituelles de dépôt connues de l'homme du métier. Ce revêtement peut être par exemple du silicium ; du verre ; du dioxyde de silicium ou un polymère (per)fluoré.

L'homme du métier connaît différentes molécules-sonde utilisables dans le cadre de la présente invention et connues pour détecter des analytes spécifiques volatils comme un aldéhyde, du formaldéhyde, de l'acétaldéhyde, du naphtalène, une amine primaire notamment aromatique, de l'indole, du scatole, du tryptophane, de l'urobilinogène, du pyrrole, du benzène, du toluène, du xylène, du styrène, du naphtalène et les biomarqueurs volatils tels que le 1-méthyl naphtalène, le p-méthyl anisate, le méthyl nicotinate et le o-phényl anisole. De telles molécules-sonde sont notamment choisies parmi les énaminomes et les couples β-dicétone/amine correspondants, les imines et les hydrazines, le 4-aminopent-3-en-2-one (Fluoral-P), l'acide croconique et les molécules-sonde à fonction aldéhyde que sont le p-diméthylaminobenzaldéhyde (DMABA ou DAB), le p-diméthylaminocinnamaldéhyde (DMACA), le p-méthoxybenzaldéhyde (MOB) et le 4-méthoxy-1-naphtaldéhyde (MON), les mélanges et les sels dérivés de ces composés. Des informations complémentaires sur les molécules-sonde utilisables peuvent être trouvées dans la demande internationale WO 2007/031657 publiée le 22 mars 2007.

Les molécules-sonde se trouvent notamment à la surface des pores du matériau poreux. Les molécules-sonde peuvent être adsorbées à la surface des pores de ce matériau et/ou liées à cette surface par des liaisons non-covalentes (liaisons hydrogène ou liaisons ioniques) et/ou par des liaisons covalentes.

Le pourcentage pondéral de molécules-sonde est avantageusement de 0,01 à 30%, en particulier de 0,1 à 20% et, tout particulièrement, de 1 à 10% rapporté au poids total du matériau poreux polymère ou de type sol-gel.

Avantageusement, ledit dispositif de détection optique comprend :

- au moins une source d'excitation lumineuse pour éclairer successivement lesdites zones de détection,
- au moins un collecteur optique pour recevoir au moins un signal lumineux provenant d'au moins l'une desdites molécules-sonde contenues dans les zones de détection successivement éclairées, en réponse audit signal d'excitation lumineuse correspondant, et
- des moyens de calcul pour calculer une modification des propriétés spectrales d'au moins l'une desdites molécules-sonde, à partir dudit signal lumineux de réponse préalablement reçu.

Lesdits moyens de calcul calculent avantageusement la valeur d'au moins une grandeur spectrale du signal de réponse préalablement reçu, et comparent la valeur ainsi calculée à une valeur de référence de la même grandeur spectrale, déterminant ainsi une modification des propriétés spectrales de ladite molécule-sonde.

Selon un mode de réalisation de l'invention, ledit au moins un collecteur optique est apte à recevoir le signal lumineux de réponse transmis au travers de la couche de matériau poreux ou réfléchi par ladite couche de matériau poreux. La détection optique de la modification des propriétés spectrales d'au moins l'une desdites molécules-sonde repose sur des techniques de spectroscopie d'absorption.

Selon un autre mode de réalisation de l'invention, ledit au moins un collecteur optique est apte à recevoir le signal lumineux de réponse émis par fluorescence par au moins une molécule-sonde de la couche de matériau poreux ayant réagi avec un analyte d'intérêt. La détection optique de la modification des propriétés spectrales d'au moins l'une desdites molécules-sonde repose sur des techniques de spectroscopie d'émission par fluorescence.

Ladite au moins une source d'excitation lumineuse et ledit au moins un collecteur optique peuvent être disposés en regard l'un de l'autre par rapport à la couche de matériau poreux, ledit substrat étant transparent ou translucide.

Alternativement, le dispositif de mesure optique peut comprendre une pluralité de sources d'excitation lumineuse disposées chacune en regard d'une zone distincte de détection de ladite couche de matériau poreux de manière sensiblement orthogonale à celle-ci, et un unique collecteur optique disposé en regard d'une extrémité latérale dudit substrat, ledit substrat étant transparent ou translucide.

Par ailleurs, le système de détection selon l'invention peut comprendre une pluralité de couches de matériau poreux, chaque couche étant dédiée à la détection d'une catégorie différente d'analyte d'intérêt. Chacune desdites couches est distribuée spatialement sur ledit substrat selon un motif donné. Plus précisément, chacune desdites couches est disposée à la surface dudit substrat de manière à s'étendre longitudinalement suivant un chemin d'écoulement fluidique de l'échantillon gazeux. Chaque matériau poreux contient une pluralité de molécules-sonde, chaque molécule-sonde pouvant réagir avec un analyte d'intérêt de catégorie déterminée, éventuellement distincte de celle des couches de matériau poreux voisines, en entraînant une modification des propriétés spectrales de ladite molécule-sonde.

L'invention porte également sur un procédé de réalisation d'un système de détection d'analytes d'intérêt présents dans un échantillon gazeux selon l'une quelconque des caractéristiques précédentes, comprenant une étape de formation de ladite couche de matériau poreux à la surface dudit substrat caractérisée en ce qu'elle comprend les étapes consistant à :

- délimiter, par photolithographie, à la surface dudit substrat, au moins un site localisé et de forme définie s'étendant longitudinalement suivant ledit chemin fluidique, mouillable par une solution contenant ledit matériau ou à partir de laquelle ledit matériau est obtenu, les zones entourant ledit site étant non mouillables par ladite solution ;
- déposer, sur ledit site et lesdites zones, ladite solution ; moyennant quoi ledit matériau est obtenu au niveau dudit site.

La mouillabilité est définie par l'angle de contact, ou angle de raccordement, que forme une goutte de la solution avec le substrat au niveau du site de dépôt de cette goutte.

Ainsi, lorsque l'on précise qu'un site de la surface du substrat est mouillable vis-à-vis de la solution, cela signifie, généralement, qu'une goutte de cette solution déposée va former par rapport au site de dépôt un angle de contact présentant généralement une valeur inférieure à 90° tandis que, pour les zones non mouillables entourant ledit site, cela signifie que l'angle de contact formé entre une goutte de la solution et ces zones présente généralement une valeur supérieure à 90°. D'un point de vue pratique, cela signifie que la solution,

lorsqu'elle est déposée sur l'ensemble de la surface du substrat, se concentre au niveau des sites mouillables par cette solution et ne reste pas ou peu au niveau des zones non mouillables.

De plus, l'invention porte sur un procédé de détection d'analytes d'intérêt présents dans un échantillon gazeux, caractérisé en ce que :

- on génère un écoulement de l'échantillon gazeux suivant un chemin d'écoulement fluidique, de sorte que l'échantillon gazeux vienne au contact d'une couche d'un matériau poreux, ladite couche étant disposée sur une surface d'un substrat de manière à s'étendre longitudinalement suivant ledit chemin fluidique, ledit matériau poreux contenant une pluralité de molécules-sonde, chaque molécule-sonde pouvant réagir avec l'analyte d'intérêt en entraînant une modification des propriétés spectrales de ladite molécule-sonde ; et
- on détecte successivement, par un dispositif de détection optique, au niveau de zones distinctes de détection de ladite couche de matériau poreux réparties suivant ledit chemin fluidique, une modification des propriétés spectrales d'au moins l'une desdites molécules-sonde, l'étape de détection optique consistant à
- éclairer successivement lesdites zones de détection suivant ledit chemin fluidique, à l'aide d'au moins une source d'excitation lumineuse ; et à
- recevoir au moins un signal lumineux provenant d'au moins l'une desdites molécules-sonde contenues dans les zones de détection successivement éclairées, à l'aide d'au moins un collecteur optique, en réponse audit signal d'excitation lumineuse correspondant ; et à
- calculer une modification des propriétés spectrales d'au moins l'une desdites molécules-sonde, à partir dudit signal lumineux de réponse préalablement reçu.

Ladite étape de calcul peut comprendre le calcul de la valeur d'au moins une grandeur spectrale du signal de réponse préalablement reçu, et la comparaison de la valeur ainsi calculée à une valeur de référence de la même grandeur spectrale, déterminant ainsi une modification des propriétés spectrales de ladite molécule-sonde.

D'autres avantages et caractéristiques de l'invention apparaîtront dans la description détaillée non limitative ci-dessous.

## BRÈVE DESCRIPTION DES DESSINS

On décrira à présent, à titre d'exemples non limitatifs, des modes de réalisation de l'invention, en se référant aux dessins annexés, dans lesquels :

La figure 1 est une vue schématique en coupe transversale d'un système de détection selon le mode de réalisation préféré de l'invention ;

La figure 2 est une vue schématique de dessus en coupe longitudinale de la chambre fluidique comportant un orifice d'entrée de gaz et un orifice de sortie de gaz ;

La figure 3 est une vue schématique partielle en perspective de la couche de matériau poreux en regard de laquelle est disposée une pluralité de sources d'excitation lumineuse, la couche étant spatialement continue ;

La figure 4 est une vue schématique partielle en perspective de la couche de matériau poreux en regard de laquelle est disposée une pluralité de sources d'excitation lumineuse, la couche étant spatialement discontinue ;

La figure 5 présente une schématisation des étapes (a) et (b) du procédé de formation de la couche de matériau poreux selon un mode de réalisation mettant en œuvre un substrat en verre, un matériau à déposer hydrophile du type sol-gel contenant une molécule-sonde et une résine photosensible positive ;

La figure 6 présente une schématisation des étapes (c) et (d) du procédé de réalisation de la couche de matériau poreux selon le mode de réalisation de la figure 5 ;

La figure 7 présente une schématisation de l'étape (e) du procédé selon le mode de réalisation de la figure 5, cette étape consistant au dépôt du matériau sol-gel ;

La figure 8 illustre un exemple d'évolution temporelle de la concentration en DDL (3,5 diacétyl-1,4 dihydrolutidine) au niveau de deux zones de détection de la couche de matériau poreux, dans le cadre d'un procédé d'étalonnage du système de détection.

## EXPOSÉ DÉTAILLÉ D'UN MODE DE RÉALISATION PRÉFÉRÉ

Sur la figure 1 est représenté un système de détection 1 d'analytes d'intérêt présents dans un échantillon gazeux selon un mode de réalisation préféré de l'invention.

Le détecteur 1 comprend une chambre fluidique 10 munie d'un orifice d'entrée 11 de gaz et d'un orifice de sortie 12 de gaz. Ces deux orifices 11, 12 sont disposés de manière à définir, à l'intérieur de la chambre fluidique 10 et en coopération avec les parois intérieures de celle-ci, un chemin fluidique d'écoulement de l'échantillon gazeux.

Comme le montre la figure 2, la chambre fluidique 10 peut s'étendre de manière rectiligne et comporter une partie courbe. La direction du chemin fluidique est donnée par la flèche A.

La chambre fluidique 10 comprend un substrat 20 solide plan dont une surface 21 forme, au moins partiellement, l'une des parois intérieures de la chambre fluidique 10 (figure 1). Le substrat 20 peut être une lame de verre de microscope.

Le substrat 20 est ici transparent ou translucide, et laisse ainsi passer la lumière.

Sur ladite surface 21 du substrat 20 est disposée une couche 30 d'un matériau poreux, de sorte que la couche 30 de matériau poreux s'étend longitudinalement suivant ledit chemin fluidique.

La couche 30 de matériau poreux forme ainsi un dépôt localisé sur la surface 21 du substrat 20 et présente une forme définie.

Le matériau poreux contient une pluralité de molécules-sonde 31, chaque molécule-sonde 31 pouvant réagir avec l'analyte d'intérêt. Ladite réaction entraîne une modification des propriétés spectrales de la molécule-sonde 31 considérée.

Les molécules-sonde 31 sont ainsi présentes en surface du matériau poreux, en particulier au niveau des pores du matériau. Le détecteur selon l'invention présente donc une surface d'adsorption et/ou de liaison des analytes spécifiques avec les molécules-sonde particulièrement importante. Cette surface est typiquement comprise entre 200 et 800 $m^2.g^{-1}$, notamment de 300 et 700 $m^2.g^{-1}$ et, en particulier, de 400 et 600 $m^2.g^{-1}$

Le détecteur selon l'invention comprend des moyens de génération d'un écoulement de l'échantillon gazeux suivant ledit chemin fluidique.

Une pompe 41 est ainsi disposée en amont ou en aval de la chambre fluidique 10, au niveau de tubes 42 de distribution de l'échantillon gazeux raccordés aux orifices d'entrée 11 et de sortie 12 de la chambre fluidique 10. La pompe 41 permet de générer un écoulement de l'échantillon gazeux dans les tubes 42 de distribution et ainsi dans la chambre fluidique 10.

Une électrovanne 43 et un débitmètre 44 peuvent être disposés en série avec la pompe 41 au niveau des tubes 42 de distribution, pour vérifier et contrôler l'écoulement gazeux dans les tubes 42.

Le système de détection 1 selon l'invention comprend également un dispositif de détection optique 50 apte à détecter successivement, au niveau de zones distinctes de détection de ladite couche 30 de matériau poreux réparties suivant ledit chemin fluidique, une modification des propriétés spectrales d'au moins l'une desdites molécules-sonde.

Plus précisément, le dispositif optique 50 comprend au moins une source 51 d'excitation lumineuse pour éclairer successivement lesdites zones de détection, au moins un collecteur optique 52 pour recevoir au moins un signal lumineux provenant d'au moins l'une desdites molécules-sonde 31 contenues dans les zones de détection successivement éclairées en réponse au signal d'excitation lumineuse correspondant, et des moyens de calcul 53 pour calculer une modification des propriétés spectrales d'au moins l'une desdites molécules-sonde 31, à partir dudit signal lumineux de réponse préalablement reçu.

Comme l'illustre la figure 3, une pluralité de sources 51 d'excitation lumineuse est disposée le long de la couche 30 de matériau poreux, suivant l'axe longitudinal de celle-ci.

Les sources 51 d'excitation peuvent être des diodes électroluminescentes (LED), disposées chacune de manière sensiblement orthogonale au substrat 20, de manière à pouvoir chacune éclairer une partie de la couche 30 de matériau poreux par l'émission d'un signal d'excitation lumineuse 33. Chacune de ces parties forme alors une zone de détection 32. Les zones de détection 32 sont ainsi réparties suivant l'axe longitudinal de la couche 30 de matériau poreux.

Dans le cas d'un substrat 20 transparent ou translucide, les diodes 51 sont avantageusement disposées de manière opposée à la couche 30 de matériau poreux par rapport au substrat 20.

Le collecteur optique 52, par exemple un photomultiplicateur, une photodiode, un capteur CCD voire un capteur CMOS, est disposé de sorte que son axe optique de réception de signaux lumineux est sensiblement compris dans le plan médian du substrat 20. Par plan médian du substrat, on entend le plan sensiblement orthogonal à la dimension d'épaisseur du substrat 20 et s'étendant à l'intérieur du substrat 20.

Ainsi, le collecteur optique 52 est disposé en regard d'une face latérale 22 du substrat 20 et à proximité de celle-ci.

Un filtre optique 54 peut être placé entre la face latérale 22 du substrat 20 et le collecteur optique 52, permettant de filtrer les signaux lumineux en fonction de leur longueur d'onde.

Le dispositif optique 50 comprend en outre des moyens de calcul 53, connectés au collecteur optique 52, permettant de calculer la valeur d'au moins une grandeur spectrale du signal lumineux reçu 34, et de comparer la valeur ainsi calculée à une valeur de référence de la même grandeur spectrale.

Ainsi, la valeur de référence de la grandeur spectrale caractérise les propriétés spectrales d'absorption et/ou de fluorescence des molécules-sonde avant réaction avec l'analyte d'intérêt.

La grandeur spectrale de référence peut être la longueur d'onde des maxima d'absorption et/ou de fluorescence, voire une diminution ou une augmentation de l'intensité d'absorption et/ou de fluorescence à une longueur d'onde donnée.

Une différence entre la valeur calculée et la valeur de référence de la grandeur spectrale permet de déduire une modification des propriétés spectrales d'au moins l'une desdites molécules-sonde et ainsi la présence d'un analyte d'intérêt dans l'échantillon gazeux.

Les moyens de calcul 53 comportent, de manière classique, un microprocesseur, une mémoire vive et/ou une mémoire vive ou carte mémoire. Ainsi, les signaux lumineux reçus 34 par le collecteur 52 sont analysés pour en extraire une valeur d'une grandeur spectrale caractéristique des propriétés spectrales de la molécule-sonde, qui est ensuite comparée à une valeur de

référence.

Le détecteur 1 selon l'invention comprend également des moyens de commande 60, connectés à la pompe 41 et à l'électrovanne 43 d'une part, et au dispositif de détection optique 50 d'autre part, permettant de contrôler de manière synchrone, la séquence de génération d'écoulement de l'échantillon gazeux et la séquence d'émission d'un signal lumineux d'excitation 33 au niveau des zones de détection 32 et la réception d'un signal de réponse 34. Les moyens de commande 60 peuvent ainsi comprendre une carte microcontrôleur.

Par ailleurs, une alarme visuelle ou sonore (non représentée) peut être présente pour informer un utilisateur lorsque, par exemple, le taux d'analytes d'intérêt détectés dépasse une valeur seuil prédéterminée.

La chambre fluidique 10 peut présenter une largeur de quelques dixièmes de millimètres à quelques dizaines de millimètres, par exemple de 0,5mm à 100mm, et une longueur de 100mm. La longueur est définie suivant la direction A du chemin fluidique et la largeur suivant un axe orthogonal à la direction A du chemin fluidique.

Elle peut être usinée dans un matériau neutre et noir, par exemple de l'inox 2017A revêtu d'une couche de Téflon noir de référence ISANA P2.

Comme décrit précédemment, le substrat 20 peut être une lame de verre de microscope.

La couche 30 de matériau poreux peut présenter une largeur comprise entre quelques microns et quelques dizaines de millimètres, par exemple entre 10 $\mu$m et 50 mm. Son épaisseur peut être comprise entre 30 nm et quelques centaines de microns, par exemple 500 $\mu$m, et de préférence être comprise entre 100 nm et 5 $\mu$m.

Le matériau poreux peut être un matériau poreux sol-gel obtenu à partir de tétraméthoxysilane (TMOS ou tétraméthylorthosilicate) et comprenant du Fluoral-P comme molécule-sonde. Un tel matériau est décrit dans la demande internationale WO 2007/031657 publiée le 22 mars 2007.

L'analyte détecté peut alors être un aldéhyde, c'est-à-dire une molécule organique ayant une fonction carbonyle terminale, comme, par exemple, le formaldéhyde, l'acétaldéhyde, le propionaldéhyde, le butyraldéhyde, l'acroléine, le pentanal, l'hexanal et le benzaldéhyde.

Le fonctionnement du système de détection selon l'invention est le suivant, en référence à la figure 3.

Un écoulement d'échantillon gazeux est généré dans la chambre fluidique 10. L'échantillon gazeux entre dans la chambre fluidique 10 par l'orifice d'entrée 11, s'écoule le long du chemin fluidique suivant la direction A, et ressort de la chambre fluidique 10 par l'orifice de sortie 12.

L'admission de l'échantillon gazeux dans la chambre fluidique 10 est réalisée, de préférence, de manière séquentielle. Ainsi, l'écoulement peut être généré pendant quelques minutes, par exemple 3 min, puis stoppé pendant quelques minutes, par exemple 5 min à 10 min. La séquence génération d'écoulement / absence d'écoulement est répétée plusieurs fois. Le débit de la pompe 41 peut être compris entre 10 ml/min à quelques centaines de millilitres par minute.

L'échantillon gazeux vient alors naturellement au contact de la couche 30 de matériau poreux et s'introduit à l'intérieur de celui-ci, du fait de la porosité du matériau.

Les analytes d'intérêt sont adsorbés et/ou liés avec les molécules-sonde 31 contenues dans la couche 30 de matériau poreux, particulièrement celles situées à la surface des pores du matériau.

Les diodes 51 éclairent successivement les zones de détection 32 de la couche 30 de matériau poreux, le long du chemin fluidique, suivant la direction A d'écoulement de l'échantillon gazeux.

Ainsi, une première diode 51-1 éclaire une première zone de détection 32-1 située le plus en amont de la couche 30 de matériau poreux.

Les molécules-sonde 31 ayant réagi avec un analyte spécifique sont alors excitées par le signal lumineux d'excitation 33 émis par la première diode 51-1. Par excitation d'une molécule-sonde ayant réagi, on entend indifféremment l'excitation directement de la molécule-sonde ayant réagi, ou l'excitation indirectement de la molécule-sonde ayant réagi, plus précisément du produit de la réaction entre la molécule-sonde et l'analyte spécifique.

Dans le cas d'une détection par fluorescence, la molécule-sonde 31 ayant réagi présente, elle-même ou le produit de la réaction, des propriétés fluorogènes.

La molécule-sonde 31 ayant réagi est alors excitée par un signal d'excitation 33 émis par la diode 51-1 suivant une longueur d'onde appropriée.

Ainsi, la DDL (3,5 diacétyl-1,4 dihydrolutidine), produit de la réaction entre le Fluoral-P (4-amino-3-penten-2-one) et le formaldéhyde, peut être excitée par un signal lumineux 33 de longueur d'onde 415 nm. Elle émet en réponse un signal lumineux 34 d'intensité maximale à 502 nm.

Le signal lumineux 34 de réponse émis par la DDL est réfracté dans le substrat 20 transparent puis ensuite transmis par réflexion totale interne jusqu'au collecteur optique 52.

Le filtre 54 placé entre le substrat 20 et le collecteur 52 permet de sélectionner les signaux lumineux 34 de réponse présentant la longueur d'onde de fluorescence de la DDL, ici 502 nm.

On compare les spectres de fluorescence de la molécule-sonde ayant réagi avec le spectre de fluorescence de la molécule-sonde avant réaction. Une différence entre les deux spectres, par exemple une modification de la longueur d'onde du maximum d'intensité de fluorescence, voire une diminution ou une augmentation de l'intensité de fluorescence à une longueur d'onde donnée permet de déduire la présence d'un analyte d'intérêt dans l'échantillon gazeux.

Il est également possible de réaliser une détection par spectroscopie d'absorbance.

Ainsi, la molécule-sonde, ici le Fluoral-P, présente un spectre d'absorption dont l'intensité maximale du signal correspond à 302 nm, alors que la DDL présente deux pics d'intensité, l'un à 206 nm et l'autre à 415 nm. La détection peut alors être réalisée en mesurant la variation d'absorbance à 415 nm, où seule absorbe la DDL.

Ainsi, la première diode 51-1 éclaire la première zone de détection 32-1 pendant une durée prédéterminée $T_1$, jusqu'à ce que, par exemple, sensiblement toutes les molécules-sonde 31 susceptibles de réagir avec des analytes aient réagi. La première diode 51-1 stoppe ensuite l'éclairement de la première zone de détection 32-1.

Puis, éventuellement après un temps de pause, la seconde diode 51-2 éclaire la seconde zone de détection 32-2, voisine de la première zone 32-1 et disposée en aval de celle-ci suivant la direction A d'écoulement de l'échantillon gazeux, pendant une durée d'éclairement prédéterminée $T_2$.

L'étape de détection optique, par fluorescence et/ou par absorbance, est renouvelée. La seconde diode 51-2 émet ainsi un signal d'excitation lumineuse 33 pour exciter les molécules-sonde ayant réagi et situées dans la seconde zone de détection 32-2. Celles-ci émettent alors un signal lumineux 34 de réponse qui est reçu par le collecteur optique 52. La modification des propriétés spectrales des molécules-sonde est mesurée, comme décrit précédemment, ce qui permet de déduire la présence d'analytes d'intérêt au niveau de la seconde zone de détection 32-2.

Le procédé de détection est ensuite poursuivi, comme précédemment, en fonction du nombre de diodes 51 disposées le long de la couche 30 de matériau poreux.

La durée d'éclairement $T_1$, $T_2$... des zones de détection 32-1, 32-2... peut être préalablement déterminée par étalonnage.

Comme mentionné précédemment, chaque durée d'éclairement peut correspondre à la durée nécessaire pour que sensiblement toutes les molécules-sonde 31 présentes dans chaque zone de détection 32-1, 32-2... et susceptibles de réagir avec les analytes aient réagi.

Alternativement, chaque durée d'éclairement peut être déterminée de manière à optimiser la sensibilité du détecteur au niveau de chacune desdites zones de détection 32-1, 32-2....

A cet égard, et à titre illustratif, la figure 8 illustre l'évolution temporelle de la concentration en DDL au niveau de deux zones de détection de la couche de matériau poreux. Ces deux zones de détection comportent une même concentration en molécules-sondes, ici du Fluoral-P.

Un écoulement gazeux comportant un taux constant de formaldéhyde est généré. Le formaldéhyde réagit alors avec le Fluoral-P présent dans les deux zones de détection pour produire de la DDL.

La DDL produite dans les zones de détection est alors excitée par un signal lumineux d'excitation émis par une diode. Il est à noter que le signal lumineux éclaire simultanément les deux zones de détection, de manière à pouvoir détecter l'évolution temporelle des concentrations D1, D2 en DDL présente dans les deux zones de détection (figure 8).

L'analyse de cette évolution temporelle permet de déterminer une période $T_i$ pour chaque zone i de détection pendant laquelle l'évolution temporelle de la concentration en DDL présente une pente élevée.

On peut ainsi définir cette période $T_i$ comme étant la durée d'éclairement optimale pour laquelle, au niveau de chaque zone i de détection, la sensibilité du détecteur est maximale.

Cette période $T_i$ peut s'obtenir par la condition suivante :

$$T_i \ / \ \forall t,\ \partial_t D_i \geq p_i$$

où $p_i$ est un critère de pente relatif à chaque zone i de détection. Il peut prendre une valeur égale ou différente pour chaque zone i et donc chaque courbe $D_i(t)$. La pente $p_i$ peut être la valeur de pente la plus importante pour une période donnée.

Ainsi, la durée d'éclairement $T_i$ de chaque zone 32-i de détection effectuée par chaque diode 51 est préalablement déterminée par ce procédé d'étalonnage et permet ainsi au détecteur de présenter une sensibilité élevée.

En éclairant chaque zone i de détection durant chaque durée d'éclairement $T_i$, correspondant sensiblement à une pente prédéterminée de la courbe $D_i$, on obtient une sensibilité de détection stable au cours du temps. Sur l'exemple de la figure 8, on pourrait ainsi éclairer la zone 1 entre $t_0$ et $t_0$ + 40 minutes, et la zone 2 entre $t_0$ + 40 minutes et $t_0$ + 90 minutes. L'instant $t_0$ correspond alors à l'abscisse 0 du graphe de la courbe 8 : il s'agit de l'instant où l'on injecte un gaz à analyser dans le système de détection, les zones de détection n'ayant préalablement pas été exposées, ou de façon négligeable, à l'analyte d'intérêt à détecter.

D'autre part, les courbes $D_i(t)$ de la figure 8 montrent que la sensibilité de chaque zone de détection évolue au cours du temps. Ainsi, la sensibilité du plot i, à un instant t, peut être quantifiée par la pente de chaque courbe $D_i(t)$, par exemple la valeur de pente la plus importante pour une période donnée. Précisons que chaque courbe peut être déterminée de façon expérimentale en utilisant un système de détection dédié à la calibration, ou par simulation. Le fait de disposer de zones de détection dont la sensibilité varie, de façon connue, en fonction du temps permet d'augmenter la dynamique de mesure, en activant une zone de détection peu sensible lorsque la concentration de l'analyte est élevée, et que les zones de détection les plus sensibles produisent un signal lumineux saturé. Inversement, lorsque la concentration de

l'analyte d'intérêt est faible, on active la zone de détection la plus sensible.

Le système de détection selon le mode de réalisation qui vient d'être décrit permet non seulement de détecter la présence d'analytes d'intérêt dans l'échantillon gazeux, mais également de quantifier ceux-ci, voire même de les piéger.

Ainsi, les moyens de calcul 53 du dispositif optique 50 peuvent déterminer la quantité de molécules-sonde 31 ayant réagi avec un analyte d'intérêt par corrélation avec l'intensité du signal lumineux de réponse 34 reçu par le collecteur 52.

De plus, les analytes d'intérêt adsorbés et/ou liés à la surface de la couche 30 de matériau poreux sont capturés par celle-ci. La couche 30 de matériau poreux agit alors comme un filtre d'analytes, ceux-ci pouvant être nocifs et présents dans un environnement contaminé.

Comme l'illustre la figure 4, la couche 30 de matériau poreux peut s'étendre de manière spatialement discontinue à la surface 21 du substrat 20. La couche 30 de matériau poreux comprend ainsi une pluralité de plots 35 de matériau poreux spatialement distincts et répartis suivant le chemin fluidique.

La surface de chaque plot 35 coïncide sensiblement avec la surface de chaque zone de détection 32 délimitée par la zone d'éclairement de la ou des sources d'excitation lumineuse 51 respective. Le volume de chaque plot peut être compris entre 50 $\mu m^3$ et 200 $mm^3$ et, de préférence, entre 100 $\mu m^3$ et 5 $mm^3$.

Par ailleurs, alternativement à une pluralité de sources d'excitation lumineuse, une unique source d'excitation 51 peut être utilisée, par exemple une unique diode 51, apte à éclairer successivement lesdites zones de détection 32.

La diode 51 unique peut être mobile en translation suivant une direction parallèle à celle du chemin fluidique. La diode 51 unique peut également être fixe, un jeu de lentilles et de miroirs étant disposé entre la diode 51 et chaque zone de détection 32, pour assurer l'éclairement successif des différentes zones de détection 32.

De plus, une pluralité de collecteurs 52 peut être utilisée, par exemple à raison d'un collecteur 52 par source d'excitation lumineuse 51. Chaque collecteur 52 peut être disposé en regard de la source d'excitation lumineuse 51 correspondante, de manière opposée à celle-ci par rapport à la couche 30 de matériau poreux et au substrat 20.

Enfin, le détecteur selon l'invention peut comprendre une pluralité de couches 30 de matériau poreux disposée sur la surface 21 du substrat 20, chaque couche 30 étant destinée à détecter une catégorie d'analyte différente.

Ainsi, lesdites couches 30 de matériau poreux peuvent s'étendre le long du chemin d'écoulement fluidique de l'échantillon gazeux, de manière parallèle les unes par rapport aux autres.

Chaque matériau poreux comprend ainsi une catégorie de molécule-sonde différente, chaque catégorie de molécule-sonde étant apte à réagir avec une catégorie d'analyte spécifique.

Le détecteur peut alors comprendre une pluralité de dispositifs optiques 50 identiques ou similaires à celui décrit précédemment, chacun étant destiné à détecter successivement, au niveau des zones de détection 32 de la couche 30 de matériau poreux correspondante, une modification des propriétés spectrales d'au moins l'une desdites molécules-sonde.

La couche 30 de matériau poreux du détecteur selon l'invention peut être réalisée de la manière suivante, en référence aux figures 5 à 7.

Dans cet exemple, le substrat est une lame de verre. La résine utilisée est la TELR-P0003PV (propylène glycol monométhyle éther acétate, Tokyo Ohka Kogyo Co. Ltd) dont la viscosité est égale à 5 mPa.s (figure 5, étape(a)). Après dépôt de la résine au moyen d'un « spin coater », une étape de cuisson est nécessaire afin d'éliminer rapidement une partie des solvants et d'assurer la polymérisation de la matrice. Ce recuit est effectué, pendant 1 min, à la température de 110°C.

L'insolation consiste en l'exposition de certaines zones de la résine, par le biais d'un système de masquage, à un rayonnement ultraviolet (figure 5, étape (b)).

Le masque permet de définir la partie de la surface du substrat sur laquelle s'étendra la couche de matériau poreux. Cette partie de surface s'étend longitudinalement suivant le chemin fluidique d'écoulement de l'échantillon gazeux.

Le masque mis en œuvre est un masque de photolithographie réalisé en quartz et en chrome. L'insolation est réalisée avec un appareil de haute-pression de type MA8, le temps d'insolation est de 20 sec à une puissance de 390 W.

La résine est ensuite révélée à l'aide d'un développeur TMA 238 fournit par JSR. Ce développeur est une solution aqueuse basique (normalité 0,28 N) contenant classiquement de l'hydroxyde de tétraméthylamonium, du KOH et du NaOH. Elle permet d'éliminer la résine insolée (Figure 5, étape (b)).

Puis une étape de recuit est nécessaire afin d'éliminer les solvants résiduels et de réticuler la résine. Ce recuit est effectué pendant 2 min à 130°C.

La résine restante réticulée s'étend ainsi suivant la partie de la surface du substrat destinée à recevoir la couche de matériau poreux.

Après le recuit, le substrat i.e. la lame de verre, possède encore des propriétés hydrophiles (angle de contact (eau) = 35-40°). Ainsi, une étape de silanisation (figure 6, étape (c)) est envisagée afin de rendre hydrophobe le substrat. Préalablement à cette silanisation, le substrat est traité par un plasma oxygène d'une puissance de 600 W pendant 1 min de façon à créer à sa surface des groupements silanol.

La silanisation est réalisée par MVD (pour « Molecular Vapor Deposition ») avec, comme silane, le

(1H, 1H, 2H, 2H)-perfluorodécyl-trichlorosilane (FDTS) de formule :

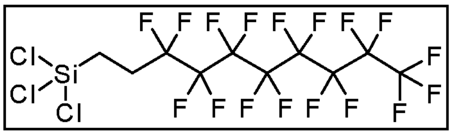

A cette étape, un dépôt de quelques nm de silane est réalisé sur le substrat. L'angle de goutte est ainsi de l'ordre de 108-110°.

La résine est ensuite éliminée (figure 6, étape (d)), rendant libre la partie de la surface du substrat destinée à recevoir la couche de matériau poreux.

Pour ce faire, le substrat est rincé pendant 10 min à l'acétone aux ultrasons, 10 min à l'éthanol aux ultrasons et 10 min à l'eau aux ultrasons puis séché à l'aide de la centrifugeuse pendant 10 min à 1000 tr/min. A la suite des rinçages, le silane déposé n'est pas éliminé. La résine est ainsi éliminée et, à l'endroit où la résine était localisée, c'est-à-dire sur la partie de la surface du substrat destinée à recevoir la couche de matériau poreux, le substrat est hydrophile.

Un matériau poreux sol-gel comprenant de la 4-amino-3-pentèn-2-one (Fluoral-P) est ensuite déposé sur les zones hydrophiles du substrat.

Ce matériau dopé de Fluoral-P est obtenu à partir d'un précurseur silicé, le tétraméthoxysilane (TMOS). Initialement, 100 mg de Fluoral-P sont dissous par sonication dans 1030 $\mu$L d'éthanol de qualité spectroscopique. Sont alors ajoutés 651 $\mu$L de TMOS et 318 $\mu$L d'eau millipore (R = 18 M$\Omega$).

Les 2 mL de sol ainsi obtenus sont conservés dans un pilulier fermé hermétiquement (bouchon + parafilm). Le sol est à nouveau soniqué pendant 15 min pour éviter l'agrégation des molécules de Fluoral-P, et agité mécaniquement jusqu'au dépôt.

Le dépôt du sol est effectué par « spin-coating », avec un temps de dépôt de l'ordre de 1 min et une vitesse rotative de l'ordre de 2000 tours par minute.

Lors du dépôt du sol sur toute la surface du substrat i.e. sur la partie de surface hydrophile et la partie de surface hydrophobe encerclant la partie hydrophile (figure 7), le sol-gel formé se concentre sur la partie hydrophile du substrat, en occupant tout l'espace possible. Ainsi, sur la partie hydrophobe, aucune trace de sol-gel n'est présente.

Ainsi, on obtient une couche de matériau poreux sol-gel dont la forme est bien définie et l'épaisseur bien contrôlée par le procédé de dépôt classique de « spin-coating ». La couche de matériau poreux s'étend longitudinalement suivant le chemin fluidique.

Bien entendu, diverses modifications peuvent être apportées par l'homme du métier à l'invention qui vient d'être décrite, uniquement à titre d'exemples non limitatifs.

## Revendications

1. Système de détection (1) d'analytes d'intérêt présents dans un échantillon gazeux, **caractérisé en ce qu'**il comprend :

   - une couche (30) d'un matériau poreux, disposée à la surface (21) d'un substrat (20) de manière à s'étendre longitudinalement suivant un chemin d'écoulement fluidique de l'échantillon gazeux, ledit matériau poreux contenant une pluralité de molécules-sonde (31), chaque molécule-sonde (31) pouvant réagir avec l'analyte d'intérêt en entraînant une modification des propriétés spectrales de ladite molécule-sonde (31) ;
   - des moyens (41) pour générer un écoulement de l'échantillon gazeux suivant ledit chemin fluidique, de sorte que l'échantillon gazeux vienne au contact de ladite couche (30) de matériau poreux ; et
   - au moins un dispositif de détection optique (50) apte à détecter successivement, au niveau de zones distinctes (32) de détection de ladite couche (30) de matériau poreux réparties suivant ledit chemin fluidique, une modification des propriétés spectrales d'au moins l'une desdites molécules-sonde (31) ledit dispositif de détection optique (50) comprenant :
   - au moins une source d'excitation lumineuse (51) pour éclairer successivement lesdites zones de détection (32),
   - au moins un collecteur optique (52) pour recevoir au moins un signal lumineux (34) provenant d'au moins l'une desdites molécules-sonde (31) contenues dans les zones de détection (32) successivement éclairées, en réponse audit signal d'excitation lumineuse (33) correspondant, et
   - des moyens de calcul (53) pour calculer une modification des propriétés spectrales d'au moins une desdites molécules-sonde (31), à partir dudit signal lumineux de réponse (34) préalablement reçu.

2. Système de détection (1) selon la revendication 1, **caractérisé en ce que** ledit matériau est microporeux ou nanoporeux.

3. Système de détection (1) selon la revendication 1 ou 2, **caractérisé en ce que** ledit matériau est un sol-gel ou un polymère.

4. Système de détection (1) selon l'une quelconque des revendications 1 à 3, **caractérisé en ce que** ledit matériau est un matériau nanoporeux sol-gel d'oxydes métalliques.

5. Système de détection (1) selon l'une quelconque des

revendications 1 à 4, **caractérisé en ce que** ledit substrat (20) est transparent ou translucide.

**6.** Système de détection (1) selon la revendication 1, **caractérisé en ce que** lesdits moyens de calcul (53) calculent la valeur d'au moins une grandeur spectrale du signal lumineux de réponse (34) préalablement reçu, et comparent la valeur ainsi calculée à une valeur de référence de la même grandeur spectrale, déterminant ainsi une modification des propriétés spectrales de ladite molécule-sonde.

**7.** Système de détection (1) selon la revendication 1, **caractérisé en ce que** ledit au moins un collecteur optique (52) est apte à recevoir le signal lumineux de réponse (34) transmis au-travers de la couche (30) de matériau poreux ou réfléchi par ladite couche (30) de matériau poreux.

**8.** Système de détection (1) selon la revendication 1, **caractérisé en ce que** ledit au moins un collecteur optique (52) est apte à recevoir le signal lumineux de réponse (34) émis par fluorescence par au moins une molécule-sonde (31) de la couche (30) de matériau poreux ayant réagi avec un analyte d'intérêt.

**9.** Système de détection (1) selon l'une quelconque des revendications précédentes, **caractérisé en ce que** ladite au moins une source d'excitation lumineuse (51) et ledit au moins un collecteur optique (52) sont disposés en regard l'un de l'autre par rapport à la couche (30) de matériau poreux, ledit substrat (20) étant transparent ou translucide.

**10.** Système de détection (1) selon la revendication 8, **caractérisé en ce que** le dispositif de mesure optique (50) comprend une pluralité de sources d'excitation lumineuse (51) disposées chacune en regard d'une zone distincte de détection (32) de ladite couche (30) de matériau poreux de manière sensiblement orthogonale à celle-ci, et un unique collecteur optique (52) disposé en regard d'une extrémité latérale (22) dudit substrat (20), ledit substrat (20) étant transparent ou translucide.

**11.** Système de détection (1) selon l'une quelconque des revendications précédentes, **caractérisé en ce qu'**il comprend une pluralité de couches (30) de matériau poreux, chaque couche (30) étant dédiée à la détection d'une catégorie différente d'analyte d'intérêt.

**12.** Procédé de réalisation d'un système de détection (1) d'analytes d'intérêt présents dans un échantillon gazeux selon l'une quelconque des revendications 1 à 11, comprenant une étape de formation de ladite couche (30) de matériau poreux à la surface (21) dudit substrat (20) **caractérisée en ce qu'**elle comprend les étapes consistant à :

- délimiter, par photolithographie, à la surface (21) dudit substrat (20), au moins un site localisé et de forme définie s'étendant longitudinalement suivant ledit chemin fluidique, mouillable par une solution contenant ledit matériau poreux ou à partir de laquelle ledit matériau poreux est obtenu, les zones entourant ledit site étant non mouillables par ladite solution ;
- déposer, sur ledit site et lesdites zones, ladite solution ; moyennant quoi ladite couche de matériau poreux est obtenu au niveau dudit site.

**13.** Procédé de détection d'analytes d'intérêt présents dans un échantillon gazeux, **caractérisé en ce que** :

- on génère un écoulement de l'échantillon gazeux suivant un chemin d'écoulement fluidique, de sorte que l'échantillon gazeux vienne au contact d'une couche (30) d'un matériau poreux, ladite couche (30) étant disposée sur une surface (21) d'un substrat (20) de manière à s'étendre longitudinalement suivant ledit chemin fluidique, ledit matériau poreux contenant une pluralité de molécules-sonde, chaque molécule-sonde pouvant réagir avec l'analyte d'intérêt en entraînant une modification des propriétés spectrales de ladite molécule-sonde ; et
- on détecte successivement, par un dispositif de détection optique (50), au niveau de zones distinctes de détection (32) de ladite couche (30) de matériau poreux réparties suivant ledit chemin fluidique, une modification des propriétés spectrales d'au moins l'une desdites molécules-sonde l'étape de détection optique consistant à :

  - éclairer successivement lesdites zones de détection (32) suivant ledit chemin fluidique, à l'aide d'au moins une source d'excitation lumineuse (51) ; et à
  - recevoir au moins un signal lumineux (34) provenant d'au moins l'une desdites molécules-sonde contenues dans les zones de détection (32) successivement éclairées, à l'aide d'au moins un collecteur optique (52), en réponse audit signal d'excitation lumineuse (33) correspondant ; et à
  - calculer une modification des propriétés spectrales d'au moins l'une desdites molécules-sonde, à partir dudit signal lumineux de réponse (34) préalablement reçu.

**14.** Procédé de détection selon la revendication 13, **caractérisé en ce que** l'étape de calcul comprend le calcul de la valeur d'au moins une grandeur spectrale du signal de réponse (34) préalablement reçu, et la comparaison de la valeur ainsi calculée à une valeur de référence de la même grandeur spectrale, déterminant ainsi une modification des propriétés

spectrales de ladite molécule-sonde.

**Patentansprüche**

1. System (1) zum Erfassen von interessierenden Analyten, die in einer gasförmigen Probe vorhanden sind,
**dadurch gekennzeichnet, dass** es enthält:

   - eine Schicht (30) aus einem porösen Material, die an der Oberfläche (21) eines Substrats (20) so angeordnet ist, dass sie sich longitudinal entlang eines Strömungspfads der gasförmigen Probe erstreckt, wobei das poröse Material eine Vielzahl von Sondenmolekülen (31) enthält, wobei jedes Sondenmolekül (31) mit dem interessierenden Analyten reagieren kann, indem es eine Änderung der spektralen Eigenschaften des Sondenmoleküls (31) bewirkt;
   - Einrichtungen (41) zum Erzeugen einer Strömung der gasförmigen Probe entlang des Strömungspfads so, dass die gasförmige Probe mit der Schicht (30) aus porösem Material in Kontakt gelangt; und
   - zumindest eine optische Erfassungsvorrichtung (50), die dazu geeignet ist, nacheinander im Bereich separater Detektionszonen (32) der Schicht (30) aus porösem Material, die entlang des Strömungspfades verteilt sind, eine Änderung der spektralen Eigenschaften von zumindest einem der Sondenmoleküle (31) zu erfassen, wobei die optische Erfassungsvorrichtung (50) enthält:
   - zumindest eine Lichtanregungsquelle (51) zum aufeinanderfolgenden Beleuchten der Detektionszonen (32),
   - zumindest einen optischen Kollektor (52) zum Empfangen zumindest eines Lichtsignals (34) von zumindest einem der Sondenmoleküle (31), die in den nacheinander beleuchteten Detektionszonen (32) enthalten sind, in Reaktion auf das entsprechende Lichtanregungssignal (33), und
   - Recheneinrichtungen (53) zum Berechnen einer Änderung der spektralen Eigenschaften zumindest eines der Sondenmoleküle (31) ausgehend von dem zuvor empfangenen Reaktionslichtsignal (34).

2. Erfassungssystem (1) nach Anspruch 1,
**dadurch gekennzeichnet, dass**
das Material mikroporös oder nanoporös ist.

3. Erfassungssystem (1) nach Anspruch 1 oder 2,
**dadurch gekennzeichnet, dass**
das Material ein Sol-Gel oder ein Polymer ist.

4. Erfassungssystem (1) nach einem der Ansprüche 1 bis 3,
**dadurch gekennzeichnet, dass**
das Material ein nanoporöses Sol-Gel-Material aus Metalloxiden ist.

5. Erfassungssystem (1) nach einem der Ansprüche 1 bis 4,
**dadurch gekennzeichnet, dass**
das Substrat (20) transparent oder lichtdurchlässig ist.

6. Erfassungssystem (1) nach Anspruch 1,
**dadurch gekennzeichnet, dass**
die Recheneinrichtungen (53) den Wert von zumindest einer spektralen Größe des zuvor empfangenen Reaktionslichtsignals (34) berechnen und den so berechneten Wert mit einem Referenzwert derselben spektralen Größe vergleichen, wodurch somit eine Änderung der spektralen Eigenschaften des Sondenmoleküls ermittelt wird.

7. Erfassungssystem (1) nach Anspruch 1,
**dadurch gekennzeichnet, dass**
der zumindest eine optische Kollektor (52) dazu geeignet ist, das Reaktionslichtsignal (34), das durch die Schicht (30) aus porösem Material übertragen oder von der Schicht (30) aus porösem Material reflektiert wird, zu empfangen.

8. Erfassungssystem (1) nach Anspruch 1,
**dadurch gekennzeichnet, dass**
der zumindest eine optische Kollektor (52) dazu geeignet ist, das Reaktionslichtsignal (34), das durch Fluoreszenz von zumindest einem Sondenmolekül (31) der Schicht (30) aus porösem Material nach Reaktion mit einem interessierenden Analyten emittiert wird, zu empfangen.

9. Erfassungssystem (1) nach einem der vorangehenden Ansprüche,
**dadurch gekennzeichnet, dass**
die zumindest eine Lichtanregungsquelle (51) und der zumindest eine optische Kollektor (52) bezogen auf die Schicht (30) aus porösem Material einander gegenüberliegend angeordnet sind, wobei das Substrat (20) transparent oder lichtdurchlässig ist.

10. Erfassungssystem (1) nach Anspruch 8,
**dadurch gekennzeichnet, dass**
die optische Messvorrichtung (50) eine Mehrzahl von Lichtanregungsquellen (51) enthält, die jeweils gegenüber einer separaten Detektionszone (32) der Schicht (30) aus porösem Material im Wesentlichen orthogonal zu dieser angeordnet sind, sowie einen einzelnen optischen Kollektor (52), der einem seitlichen Ende (22) des Substrats (20) gegenüberliegend angeordnet ist, wobei das Substrat (20) transparent oder lichtdurchlässig ist.

**11.** Erfassungssystem (1) nach einem der vorangehenden Ansprüche,
**dadurch gekennzeichnet, dass**
es eine Mehrzahl von Schichten (30) aus porösem Material enthält, wobei jede Schicht (30) für das Erfassen einer anderen Kategorie von interessierenden Analyten bestimmt ist.

**12.** Verfahren zum Herstellen eines Systems (1) zum Erfassen von interessierenden Analyten, die in einer gasförmigen Probe vorhanden sind, nach einem der Ansprüche 1 bis 11,
umfassend einen Schritt des Bildens der Schicht (30) aus porösem Material an der Oberfläche (21) des Substrats (20),
**dadurch gekennzeichnet, dass** er die Schritte umfasst:

- Abgrenzen von zumindest einer festgelegten Stelle definierter Form, die sich longitudinal entlang des Strömungspfads erstreckt und mit einer Lösung benetzbar ist, die das poröse Material enthält oder aus der das poröse Material gewonnen wird, an der Oberfläche (21) des Substrats (20) durch Fotolithografie, wobei die Zonen um die Stelle herum nicht mit der Lösung benetzbar sind;
- Aufbringen der Lösung auf die Stelle und die Zonen; wodurch die Schicht aus porösem Material im Bereich der genannten Stelle erhalten wird.

**13.** Verfahren zum Erfassen von interessierenden Analyten, die in einer gasförmigen Probe vorhanden sind,
**dadurch gekennzeichnet, dass**

- eine Strömung der gasförmigen Probe entlang eines Strömungspfads so erzeugt wird, dass die gasförmige Probe mit einer Schicht (30) aus porösem Material in Kontakt gelangt, wobei die Schicht (30) an einer Oberfläche (21) eines Substrats (20) so angeordnet ist, dass sie sich longitudinal entlang des Strömungspfads erstreckt, wobei das poröse Material eine Vielzahl von Sondenmolekülen enthält, wobei jedes Sondenmolekül mit dem interessierenden Analyten reagieren kann, indem es eine Änderung der spektralen Eigenschaften des Sondenmoleküls bewirkt; und
- über eine optische Erfassungsvorrichtung (50) nacheinander im Bereich separater Detektionszonen (32) der Schicht (30) aus porösem Material, die entlang des Strömungspfades verteilt sind, eine Änderung der spektralen Eigenschaften von zumindest einem der Sondenmoleküle erfasst wird, wobei der Schritt der optischen Erfassung umfasst:
- aufeinanderfolgendes Beleuchten der Detektionszonen (32) entlang des Strömungspfads mittels zumindest einer Lichtanregungsquelle (51); und
- Empfangen zumindest eines Lichtsignals (34) von zumindest einem der Sondenmoleküle, die in den nacheinander beleuchteten Detektionszonen (32) enthalten sind, mittels zumindest eines optischen Kollektors (52) in Reaktion auf das entsprechende Lichtanregungssignal (33); und
- Berechnen einer Änderung der spektralen Eigenschaften zumindest eines der Sondenmoleküle ausgehend von dem zuvor empfangenen Reaktionslichtsignal (34).

**14.** Erfassungsverfahren nach Anspruch 13,
**dadurch gekennzeichnet, dass**
der Schritt des Berechnens das Berechnen des Wertes von zumindest einer spektralen Größe des zuvor empfangenen Reaktionslichtsignals (34) und das Vergleichen des so berechneten Wertes mit einem Referenzwert derselben spektralen Größe umfasst, wodurch somit eine Änderung der spektralen Eigenschaften des Sondenmoleküls ermittelt wird.

## Claims

**1.** A system (1) for detecting analytes of interest present in a gas sample, **characterized in that** it comprises:

- a layer (30) of porous material, positioned at the surface (21) of a substrate (20) so as to extend longitudinally along a fluidic flow path of the gas sample, said porous material containing a plurality of probe molecules (31), each probe molecule (31) being able to react with the analyte of interest by causing a change in the spectral properties of said probe molecule (31);
- means (41) for generating a flow of the gas sample along the fluidic path, so that the gas sample comes into contact with said layer (30) of porous material; and
- at least one optical detection device (50) capable of successively detecting, at distinct detection areas (32) of said porous material layer (30) distributed along said fluidic path, a change in the spectral properties of at least one of said probe molecules (31), said optical detection device (50) comprising:
- at least one excitation light source (51) for successively illuminating said detection areas (32),
- at least one optical collector (52) for receiving at least one light signal (34) from at least one of

said probe molecules (31) contained in the successively illuminated detection areas (32), in response to said corresponding excitation light signal (33), and
- calculation means (53) for calculating a change in the spectral properties of at least one of said probe molecules (31), from said response light signal (34) received beforehand.

**2.** The detection system (1) according to claim 1, **characterized in that** said material is microporous or nanoporous.

**3.** The detection system (1) according to claim 1 or 2, **characterized in that** said material is a sol-gel or a polymer.

**4.** The detection system (1) according to any of claims 1 to 3, **characterized in that** said material is a solgel nanoporous material based on metal oxides.

**5.** The detection system (1) according to any of claims 1 to 4, **characterized in that** said substrate (20) is transparent or translucent.

**6.** The detection system (1) according to claim 1, **characterized in that** said calculation means (53) calculate the value of at least one spectral quantity of the response light signal (34) received beforehand, and compare the thereby calculated value with a reference value of the same spectral quantity, thereby determining a change in the spectral properties of said probe molecule.

**7.** The detection system (1) according to claim 1, **characterized in that** said at least one optical collector (52) is able to receive the response light signal (34) transmitted through the layer (30) of porous material or reflected by said layer (30) of porous material.

**8.** The detection system (1) according to claim 1, **characterized in that** said at least one optical collector (52) is able to receive the response light signal (34) emitted by fluorescence by at least one probe molecule (31) of the layer (30) of porous material having reacted with an analyte of interest.

**9.** The detection system (1) according to any of precedent claims, **characterized in that** said at least one excitation light source (51) and said at least one optical collector (52) are positioned facing each other relatively to the layer (30) of porous material, said substrate (20) being transparent or translucent.

**10.** The detection system (1) according to claim 8, **characterized in that** the optical measurement device (50) comprises a plurality of excitation light sources (51) each positioned facing a distinct detection area (32) of said layer (30) of porous material substantially orthogonally to the latter, and a single optical collector (52) positioned facing a lateral end (22) of said substrate (20), said substrate (20) being transparent or translucent.

**11.** The detection system (1) according to any of precedent claims, **characterized in that** it comprises a plurality of layers (30) of porous material, each layer (30) being dedicated to the detection of a different category of analyte of interest.

**12.** A method for making a system (1) for detecting analytes of interest present in a gas sample according to any of claims 1 to 11, comprising a step for forming said layer (30) of porous material at the surface (21) of said substrate (20) **characterized in that** it comprises the steps of:

- delimiting, by photolithography, at the surface (21) of said substrate (20), at least one localized site and of defined shape extending longitudinally along said fluidic path, wettable with a solution containing said material or from which said material is obtained, the areas surrounding said site being non-wettable with said solution;
- depositing, on said site and said areas, said solution; in return for which said material is obtained at said site.

**13.** A method for detecting analytes of interest present in a gas sample, **characterized in that**:

- a flow of the gas sample is generated along a fluidic flow path, so that the gas sample will come into contact with a layer (30) of porous material, said layer (30) being positioned on a surface (21) of a substrate (20) so as to extend longitudinally along said fluidic path, said porous material containing a plurality of probe molecules, each probe molecule being able to react with the analyte of interest by causing a change in the spectral properties of said probe molecule; and
- a change in the spectral properties of at least one of said probe molecules is successively detected by an optical detection device (50), at distinct detection areas (32) of said layer (30) of porous material, distributed along said fluidic path, the optical detection step consisting of:
- successively illuminating said detection areas (32) along said fluidic path, with at least one excitation light source (51); and of
- receiving at least one light signal (34) from at least one of said probe molecules contained in the successively illuminated detection areas (32), with at least one optical collector (52), in response to said corresponding excitation light signal (33); and of

- calculating a change in the spectral properties of at least one of said probe molecules, from said response light signal (34) received beforehand.

**14.** The detection method according to claim 13, **characterized in that** the calculation step comprises the calculation of the value of at least one spectral quantity of the response signal (34) received beforehand and the comparison of the thereby calculated value with a reference value of the same spectral quantity, thereby determining a change in the spectral properties of said probe molecule.

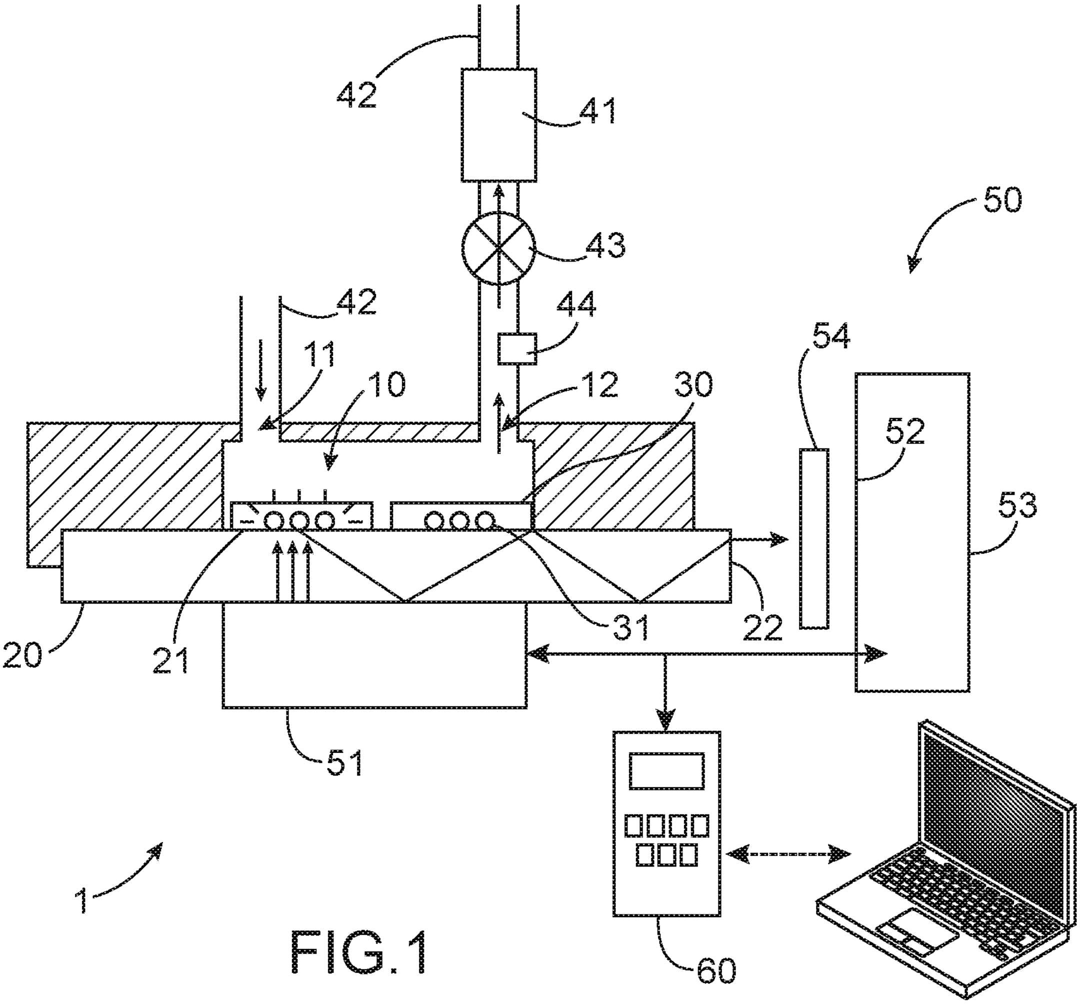


FIG.1

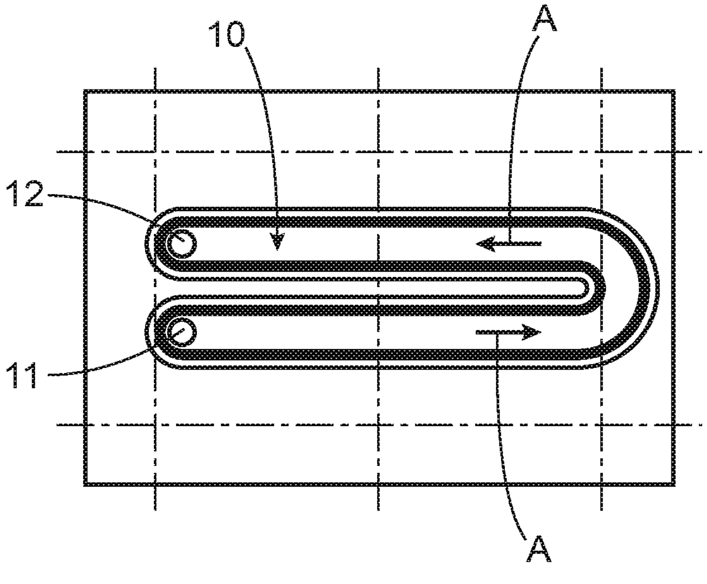


FIG.2

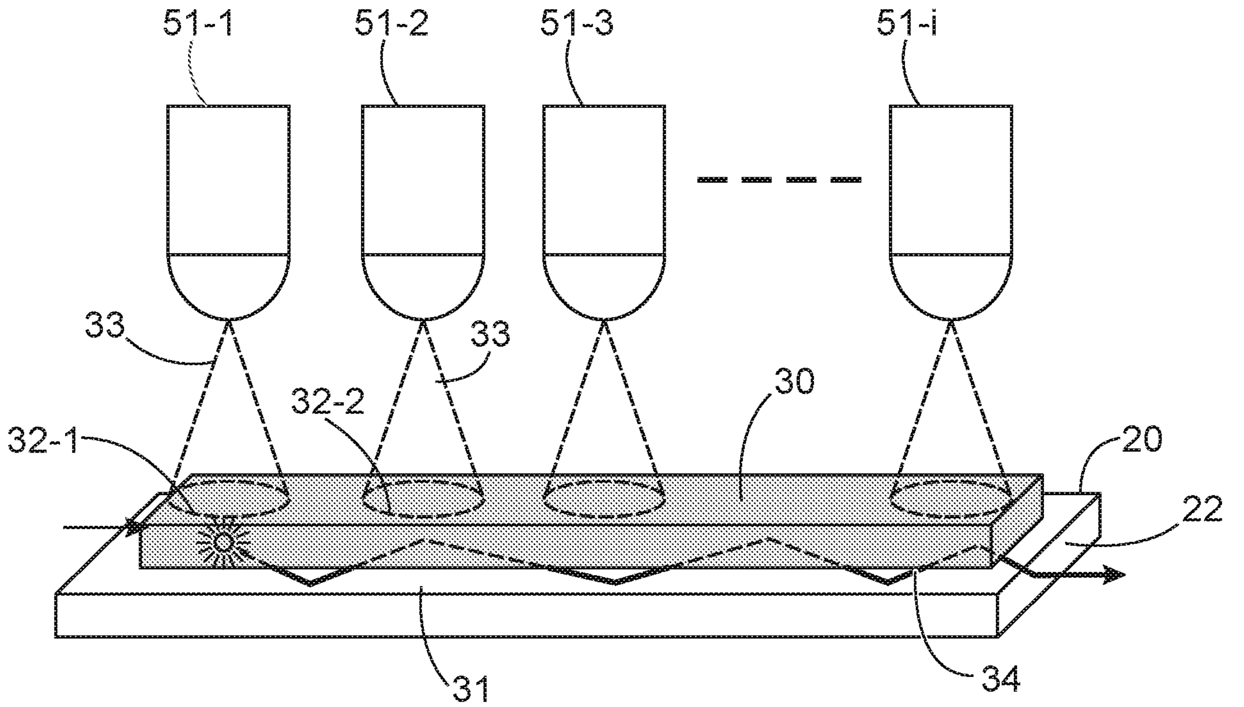
51-1
51-2
51-3
51-i
33
33
32-2
30
32-1
20
22
31
34

FIG.3

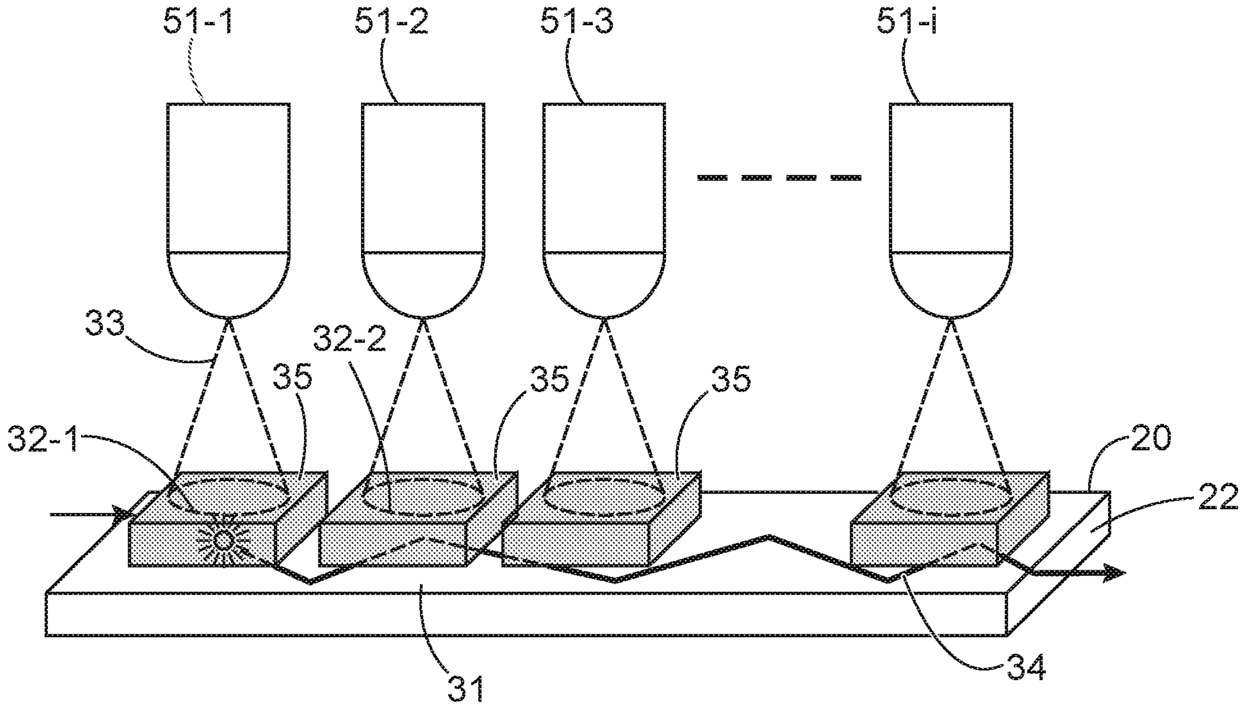
51-1
51-2
51-3
51-i
33
32-2
35
35
35
32-1
20
22
31
34

FIG.4

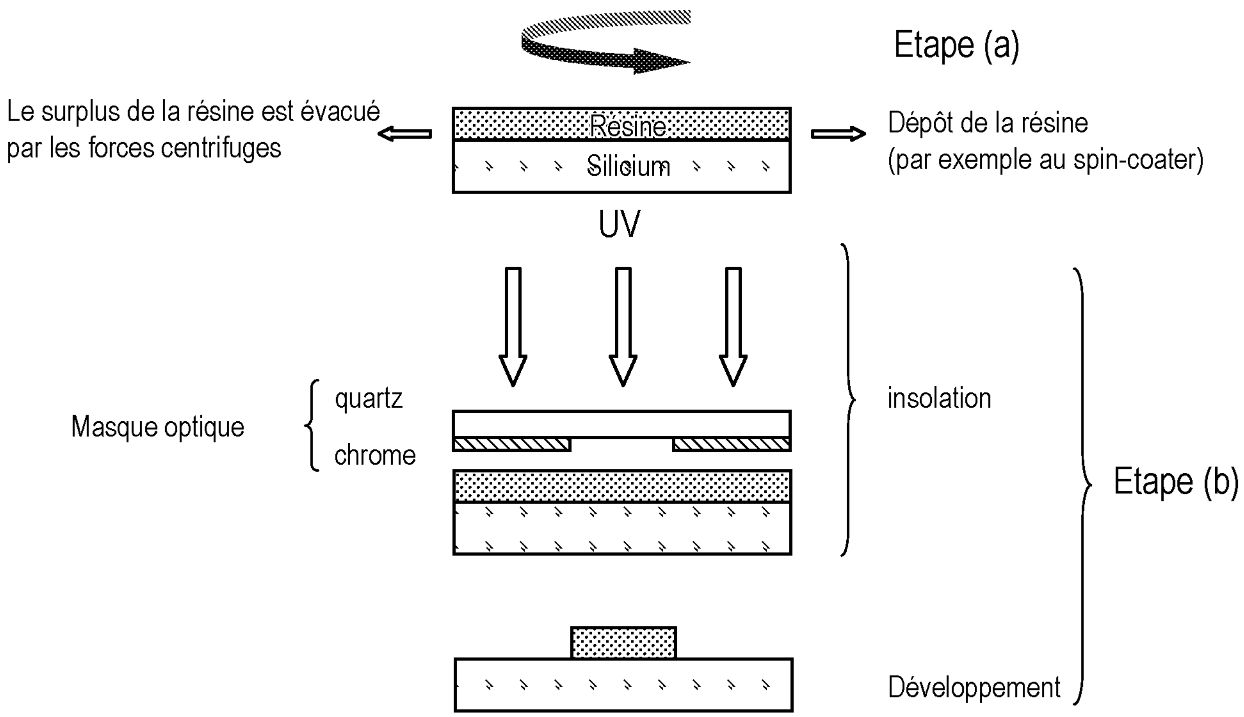
Etape (a)
Le surplus de la résine est évacué par les forces centrifuges
Résine
Silicium
Dépôt de la résine (par exemple au spin-coater)
UV
Masque optique
quartz
chrome
insolation
Etape (b)
Développement

FIG.5

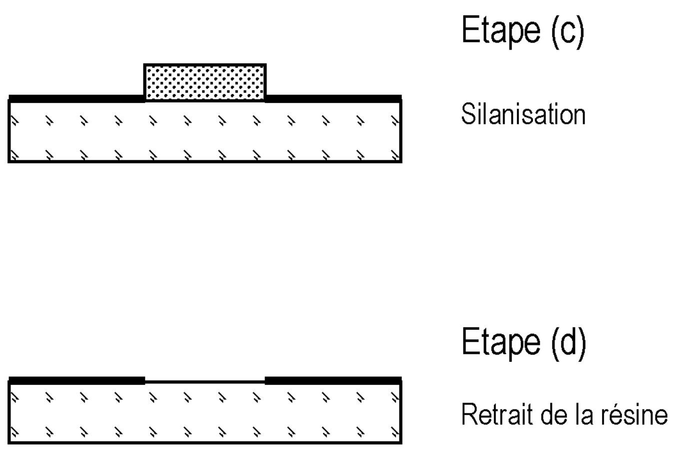
Etape (c)
Silanisation
Etape (d)
Retrait de la résine

FIG.6

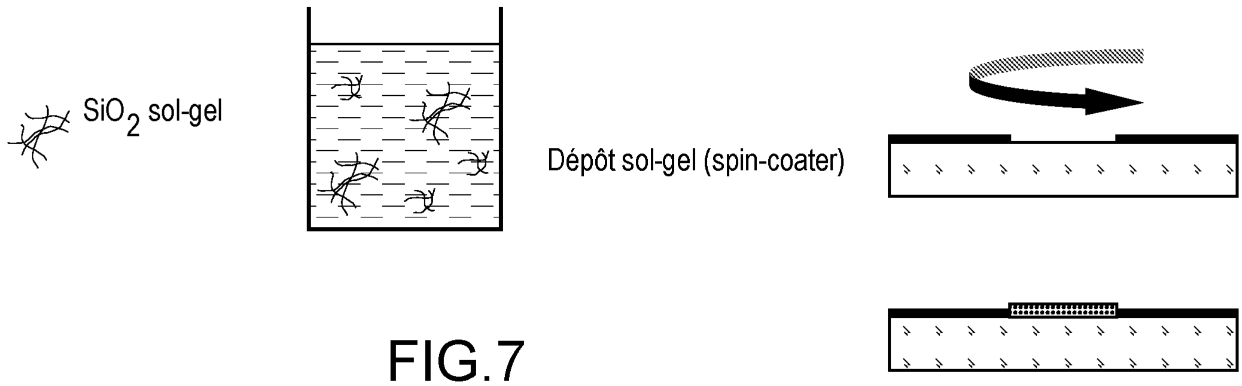
SiO2 sol-gel
Dépôt sol-gel (spin-coater)

FIG.7

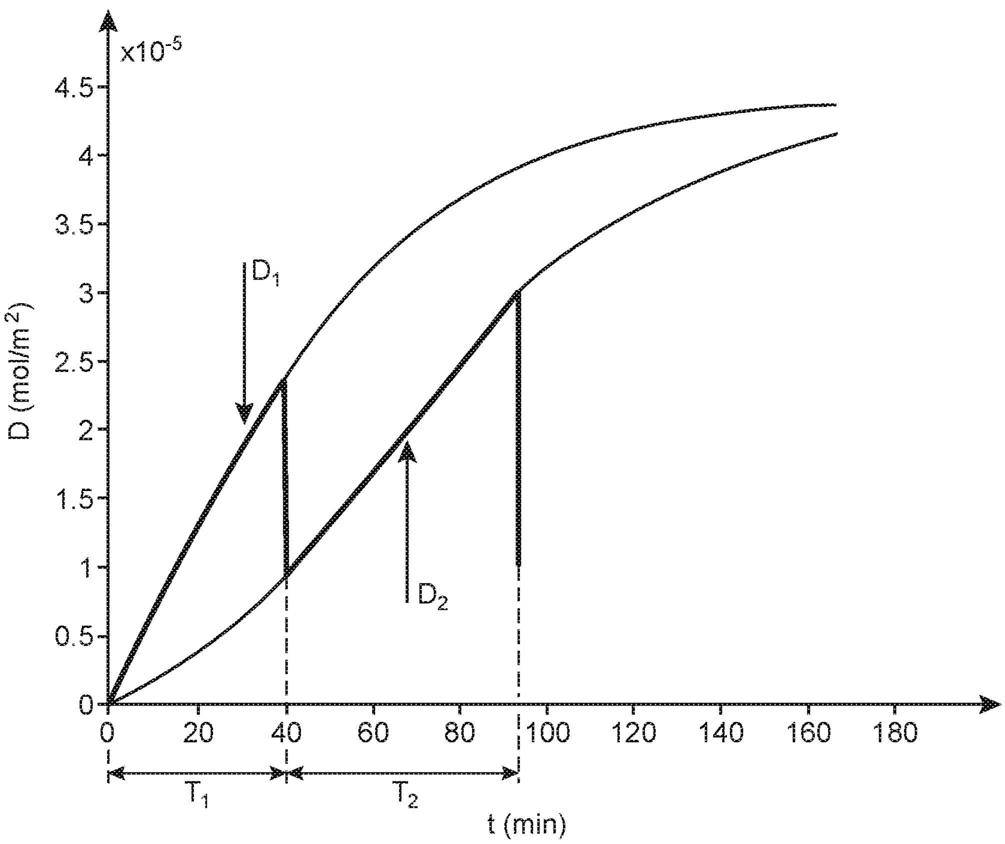
x10-5
4.5
4
3.5
3
2.5
2
1.5
1
0.5
0
D (mol/m2)
D1
D2
0
20
40
60
80
100
120
140
160
180
T1
T2
t (min)

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- WO 2007031657 A

### Littérature non-brevet citée dans la description

- **SCHULTZ et al.** A novel fluorescence-based array biosensor : Principle and application to DNA hydridization assays. *Biosens. Bioelectron.,* 2008, vol. 23, 987-994
- **LOISEAU et al.** A fluoroponytails containing organogelator: gelation of perfluorotributylamine and isopropopanol. *Tetrahedron,* 2002, vol. 58, 4049-4052